# EUROPEAN PATENT APPLICATION

(11) **EP 4 123 814 A1**
(43) Date of publication of application: **25.01.2023**
(21) Application number: 21771573.9
(22) Date of filing: 26.02.2021
(51) Int. Cl.: H01M 50/342, H01M 50/152, H01M 50/578, H01M 50/166

(54) **CYLINDRICAL SECONDARY BATTERY**

(30) Priority: 17.03.2020 KR 20200032786
(71) Applicant: Samsung SDI Co., Ltd., Yongin-si, Gyeonggi-do 17084 (KR)
(72) Inventor: KIM, Dae Kyu, Yongin-si, Gyeonggi-do 17084 (KR); MOON, Jin Young, Yongin-si, Gyeonggi-do 17084 (KR); LEE, Bo Ram, Yongin-si, Gyeonggi-do 17084 (KR)
(74) Representative: Marks & Clerk LLP
(86) International application number: PCT/KR2021/002493
(87) International publication number: WO 2021/187770

(57) **Abstract**

An embodiment of the present invention relates to a cylindrical secondary battery comprising: a cylindrical can; an electrode assembly accommodated in the cylindrical can; and a cap assembly comprising a cap-up, a cap-down arranged under the cap-up, a vent plate which is arranged between the cap-up and the cap-down, is separated from the cap-down, and has at least one notch formed thereon, and an insulating member inserted between the vent plate and the cap-down so as to insulate the vent plate and the cap-down from each other, wherein the cap assembly may further comprise a support member inserted between the vent plate and the cap-down, separated from the insulating member, and arranged on the inner side of the insulating member. According to the present invention, a deformation portion of a safety vent is supported to prevent deformation of the safety vent if stress occurs, and thus vent fracture can be stabilized.

## Description

### TECHNICAL FIELD

An embodiment of the present invention relates to a cylindrical secondary battery capable of preventing component deformation during assembling.

### BACKGROUND ART

In general, a cylindrical secondary battery includes a cylindrical electrode assembly, a cylindrical can for accommodating the electrode assembly and electrolyte, and a cap assembly that is coupled to the upper opening of the can to seal the can and allows current generated from the electrode assembly to flow to an external device.

In order to prevent the electrode assembly from moving, a beading part is formed by applying pressure along the upper outer circumferential surface of the can. At this time, as the pressure is applied from the outside to the inside of the can, the pressure is also applied to the cap assembly, which creates stress and causes deformation of components of the cap assembly.

In particular, when the safety vent is deformed, vent fracture pressures may change, so that the pressure is not properly discharged during overcharging, leading to defects and damages to the secondary battery, which is problematic.

The above information disclosed in this Background section is only for enhancement of understanding of the background of the invention and therefore it may contain information that does not constitute prior art.

### DESCRIPTION OF EMBODIMENTS

### TECHNICAL PROBLEM

It is an object of the present invention to provide a cylindrical secondary battery having a structure in which the stress caused by the pressure generated during can processing can be dispersed and deformation of a safety vent can be prevented.

### SOLUTION TO PROBLEM

A cylindrical secondary battery according to an embodiment of the present invention may include: a cylindrical can; an electrode assembly accommodated in the cylindrical can; and a cap assembly comprising a cap-up, a cap-down arranged under the cap-up, a vent plate which is arranged between the cap-up and the cap-down, is separated from the cap-down, and has at least one notch formed thereon, and an insulating member inserted between the vent plate and the cap-down so as to insulate the vent plate and the cap-down from each other, wherein the cap assembly may further include a support member inserted between the vent plate and the cap-down, separated from the insulating member, and arranged on the inner side of the insulating member.

The support member may be arranged on the inner region facing the longitudinal central axis of the can, on the basis of the notch.

The insulating member and the support member may have a circular ring shape, and the vent plate may further include a contact portion penetrating the insulating member and the support member to be in contact with the cap-down.

The support member may be arranged between the notch and the contact portion.

In the support member, the width in a direction perpendicular to the longitudinal central axis of the can is equal to or greater than the length between the notch and the contact portion.

The support member may be welded to the insulating member.

In addition, the present invention provides a secondary battery including: a cylindrical can; an electrode assembly accommodated in the cylindrical can; and a cap assembly comprising a top plate having at least one notch formed thereon, a bottom plate arranged under the top plate and having a contact portion in which a portion of the plate surface protrudes toward the top plate and comes into contact with the top plate, and an insulation plate arranged between the top plate and the bottom plate to insulate the top plate and the bottom plate from each other, except for the contact portion, wherein the cap assembly may further comprise a support member inserted between the top plate and the insulation plate to support the top plate.

The support member may be arranged on the inner region facing the longitudinal central axis of the can, on the basis of the notch.

The insulating member and the support member may have a circular ring shape, and the contact portion of the bottom plate may penetrate the insulating member and the support member to be in contact with the top plate.

The support member may be arranged between the notch and the contact portion, and the top plate may be shaped to surround the edge of the support member.

The support member may be welded to the insulating member.

In the support member, a portion of the surface thereof being in contact with the notch may be spaced apart from the notch.

The support member has a plurality of through-holes formed therethrough at positions corresponding to the positions of the notch.

### ADVANTAGEOUS EFFECTS OF DISCLOSURE

According to an embodiment of the present invention, a deformation portion of a safety vent is supported to prevent deformation of the safety vent if stress occurs, and thus vent fracture can be stabilized.

In addition, according to an embodiment of the present invention, since the vent fracture pressure is maintained, it is possible to stably respond to changes in pressure inside the can during overcharging, thereby preventing defects and damage to secondary batteries and ensuring reliability.

### BRIEF DESCRIPTION OF DRAWINGS

FIG. 1 is a longitudinal cross-sectional view showing a cylindrical secondary battery according to a comparative embodiment of the present invention.
FIG. 2 is a longitudinal cross-sectional view illustrating a cylindrical secondary battery according to a first embodiment of the present invention.
FIG. 3 is an enlarged longitudinal cross-sectional view of a cap assembly according to FIG. 2.
FIG. 4 is a table showing the experimental results of deformation prevention for various numerical values of major parts of FIG. 3.
FIG. 5 is a longitudinal cross-sectional view illustrating a cap assembly of a cylindrical secondary battery according to a second embodiment of the present invention.
FIG. 6 is a longitudinal cross-sectional view illustrating a cap assembly of a cylindrical secondary battery according to a third embodiment of the present invention.
FIG. 7 is a plan view illustrating a partial configuration of the cap assembly according to FIG. 6.

### BEST MODE

Example embodiments of the present invention are provided to more completely explain the present invention to a person skilled in the art. The following embodiments may be modified in various different forms, but the scope of the present invention is not limited to the following embodiments. Rather, these embodiments are provided so that this disclosure will be more thorough and complete, and will fully convey the spirit of the invention to a person skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

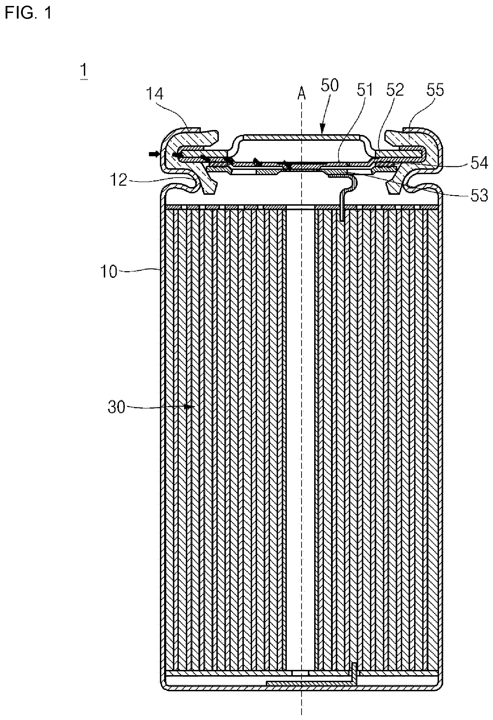

FIG. 1 is a longitudinal cross-sectional view showing a cylindrical secondary battery according to a comparative embodiment of the present invention.

As shown in FIG. 1, a general cylindrical secondary battery 1 includes a cylindrical can 10 having an opening formed at one end in the longitudinal direction, an electrode assembly 30 accommodated in the can, and a cap assembly 50 inserted into the opening. The cap assembly 50 includes a safety vent 51, a cap-up 52 disposed above the safety vent 51, and a cap-down 53 disposed below the safety vent 51. The cap assembly 50 may further include an insulating member 54 inserted between the safety vent 51 and the cap-down 53 to insulate a portion of the safety vent 51 other than the central portion thereof from contacting the cap-down 53, and an insulation gasket 55 that insulates the cap assembly 50 and the can 10 from each other. In the safety vent 51, a portion near the longitudinal central axis A of the can 10 is in contact with the cap-down 53, and a portion supported by the insulating member 54 is spaced apart from the cap-down 53.

In the opened side of the can 10, the lower portion of the cap assembly 50 is depressed inwardly in a ring shape to form a beading part 12, and the upper portion of the cap assembly 50 is bent inwardly to form a crimping part 14. In order to form the beading part 14 and the crimping part 14, a process of applying a force from the outside to the inside of the can 10 is performed, and stress is also generated in the cap assembly 50 by the external force.

The direction in which the stress is applied is a direction from the outside to the inside of the can 10, as indicated by the arrow shown in FIG. 1. Stress acts on the cap assembly 50 as a whole, but since the notch 51a is formed in the safety vent 51, the safety vent 51 may be deformed because it is relatively vulnerable to stress, compared to other components of the cap assembly 50. A portion of the safety vent 51 where deformation occurs is a portion spaced apart from the cap-down 53 (a dotted line region in FIG. 1, to be referred to as a deformed portion, hereinafter). The deformed portion of the safety vent 51 is vulnerable to be deformed toward the cap-down 53 when stress occurs, so that when the safety vent 51 is deformed, the fracture pressure of the notch 51a may vary and thus, when abnormal gas is generated inside the secondary battery 1, the gas may not be smoothly discharged, which is problematic. Accordingly, there exists a need for a structure in which the safety vent 51 does not deform even if stress occurs during assembling of the cylindrical secondary battery 1. To this end, in the present invention, proposed is a cap assembly having a novel structure.

Hereinafter, a cylindrical secondary battery according to an embodiment of the present invention will be described in detail with reference to the accompanying drawings.

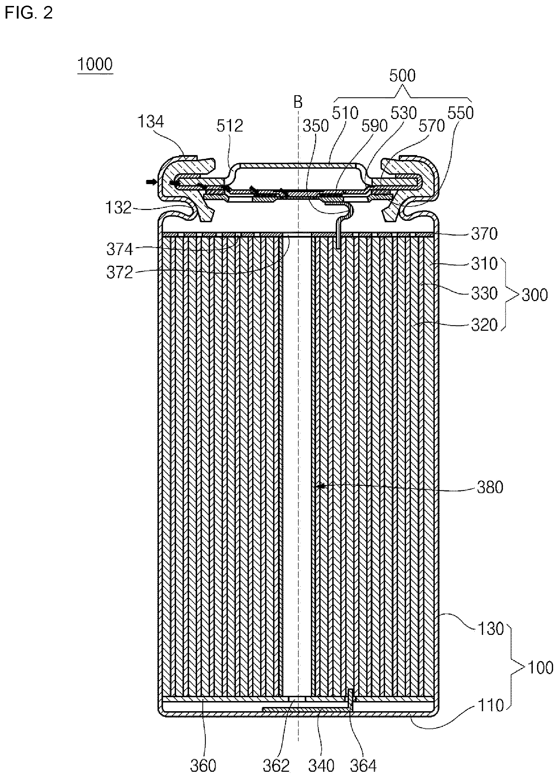

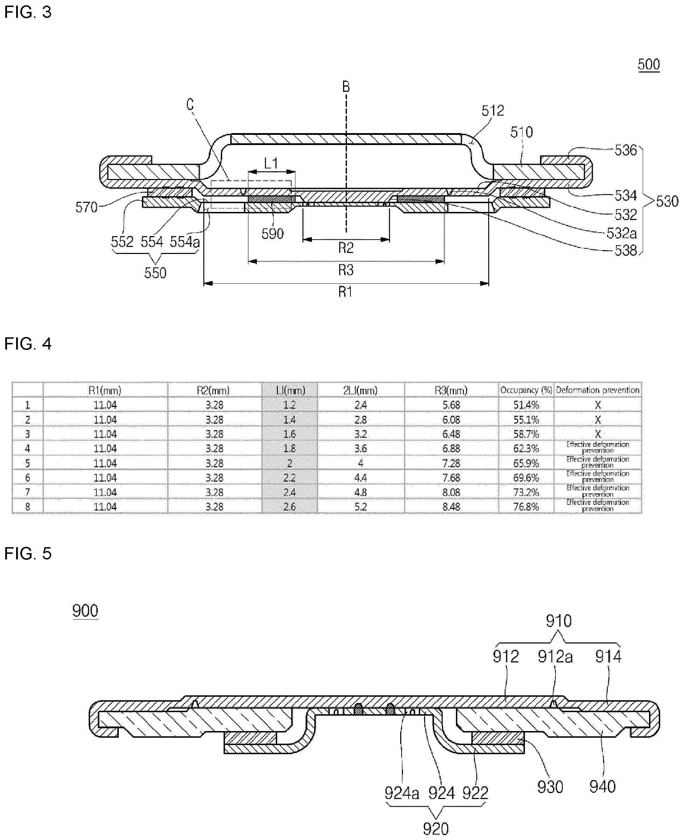

FIG. 2 is a longitudinal cross-sectional view illustrating a cylindrical secondary battery according to a first embodiment of the present invention. FIG. 3 is an enlarged longitudinal cross-sectional view of a cap assembly according to FIG. 2.

As shown in FIGS. 2 and 3, the cylindrical secondary battery 1000 according to a first embodiment of the present invention may include a cylindrical can 100, an electrode assembly 300 inserted into the can 100, a cap assembly 500 inserted into one end of the can 100, and an insulation gasket 700 inserted between the can 100 and the cap assembly 500. A center pin 380 may be coupled to the electrode assembly 300.

The can 100 includes a circular bottom portion 110 and a side portion 130 extending upwardly from the bottom portion 110, and an upper portion of the side portion 130 ids shaped to be opened (hereinafter referred to as an opening). In the manufacturing process of the secondary battery 1000, the electrode assembly 300 is inserted into the can 100 together with an electrolyte through the opening of the can 100. The can 100 may be formed of steel, a steel alloy, nickel-plated steel, nickel-plated steel alloy, aluminum, an aluminum alloy, or an equivalent thereof, but the material is not limited thereto.

The cap assembly 500 is inserted into the opening of the can 100. A beading part 132 and a crimping part 134 may be formed on the side portion 130 so as to prevent the inserted cap assembly 500 from escaping to the outside through the opening of the can 100.

The beading part 132 is formed under the cap assembly 500 and is shaped to be depressed in the inward direction of the can 100. The crimping part 134 is formed on the cap assembly 500 and is shaped to be bent in the inward direction of the can 100. Since the beading part 132 and the crimping part 134 hold the cap assembly 500 in the vertical direction, the cap assembly 500 is not separated from the can 100. The electrode assembly 300 is disposed under the cap assembly 500 inside the can 100.

The electrode assembly 300 includes a negative electrode plate 310 coated with a negative electrode active material (e.g., graphite, carbon, etc.), a positive electrode plate 320 coated with a positive active material (e.g., transition metal oxide (LiCoO2, LiNiO2, LiMn2O4, etc.)), and a separator 330 disposed between the negative electrode plate 310 and the positive electrode plate 320 to prevent a short circuit and enable only movement of lithium ions. The negative electrode plate 310, the positive electrode plate 320, and the separator 330 may be wound in a substantially cylindrical shape and accommodated in the can 100. The negative electrode plate 310 may be copper (Cu) or nickel (Ni) foil, the positive electrode plate 320 may be an aluminum (Al) foil, and the separator 330 may be polyethylene (PE) or polypropylene (PP), but the present invention is not limited thereto. A negative electrode tab 340 that downwardly protrudes and extends a predetermined length may be welded to the negative electrode plate 310, and a positive electrode tab 350 that upwardly protrudes a predetermined length may be welded to the positive electrode plate 320, but vice versa. The negative electrode tab 340 may be made of copper or nickel, and the positive electrode tab 350 may be made of aluminum, but the present invention is not limited thereto. The negative electrode tab 340 may be welded to the bottom portion 110 of the can 100, and in this case, the can 100 may operate as a negative electrode. Conversely, the positive electrode tab 350 may be welded to the bottom portion 111 of the can 100, and in this case, the can 100 may operate as a positive electrode.

In addition, a first insulation plate 360 and a second insulation plate 370 may be interposed on and under the electrode assembly 300, respectively. The first insulation plate 360 prevents the positive electrode plate 320 from electrically contacting the bottom portion 110 of the can 100, and the second insulation plate 370 prevents the negative electrode plate 310 from electrically contacting the cap assembly 500.

In the first insulation plate 360, a first hole 362 and a second hole 364 may be formed therethrough, the first hole 362 communicating with the center pin 380 so that the gas can move upward through the cylindrical center pin 380 when a large amount of gas is generated due to an abnormality of a secondary battery, and the second hole 364 allowing the negative electrode tab 340 to pass therethrough. The negative electrode tab 340 may be welded to the bottom portion 110 through the second hole 364.

In the second insulation plate 370, a first hole 372 and a second hole 374 may be formed therethrough, the first hole 372 allowing the gas to move to the cap assembly 500 when a large amount of gas is generated due to an abnormality of a secondary battery, and the second hole 374 allowing the positive electrode tab 350 to pass therethrough. The positive electrode tab 350 may be welded to a cap-down 550 to be described later through the second hole 374. The second hole 374 may include a plurality of second holes to serve as an inlet through which the electrolyte is injected into the electrode assembly 300 in an electrolyte injection process.

The center pin 380 has a hollow circular pipe shape, and may be coupled to the center of the electrode assembly 300. The center pin 380 may be formed of steel, a steel alloy, nickel-plated steel, a nickel-plated steel alloy, aluminum, an aluminum alloy, or polybutylene terephthalate, but the material is not limited thereto. The center pin 380 serves to suppress deformation of the electrode assembly 300 during charging and discharging of the secondary battery, and serves as a passage for gas generated inside the secondary battery. In some cases, the center pin 380 may be omitted.

Meanwhile, as shown in FIG. 2, the cap assembly 500 includes a cap-up 510 exposed to the outside of the can 100, a cap-down 550 disposed below the cap-up 510, a vent plate 530 disposed between the cap-up 510 and the cap-down 550, and an insulating member 570 and a support member 590, disposed between the vent plate 530 and the cap-down 550. In FIGS. 2 and 3, on the basis of the imaginary central axis B along the longitudinal direction of the can 100, the direction toward the central axis B is defined as the inward direction, and the direction away from the central axis B is defined as the outward direction.

As shown in FIG. 3, the cap-up 510 is disposed at the uppermost portion of the cap assembly 500 and may include a through-hole 512 for discharging gas generated inside the can 100 to the outside. The cap-up 510 may have a substantially disk shape, and may have a predetermined region that convexly protrudes upward about the central axis B, and a through-hole 512 may be formed in the protruding portion. A vent plate 530 is disposed under the cap-up 510, and the vent plate 530 may be coupled to surround the edge of the cap-up 510.

The vent plate 530 has a substantially disk shape, the edge of which is bent toward the edge of the cap-up 510 to be in contact with the lower edge of the cap-up 510, and may be bent back toward the inside of the can 100 around the contact portion to then be in contact with the upper edge of the cap-up 510. In the vent plate 530, a disk portion that is not bent is defined as a vent bottom portion 532, a portion that is bent from the vent bottom portion 532 toward the cap-up 510 is defined as a first support portion 534, a portion that is inwardly bent from the first support portion 534 is defined as a second support portion 536, and a portion that convexly protrude downward from the vent bottom portion 532 to be in contact with the cap-down 550 is defined as a contact portion 538. The vent plate 530 is formed so that all regions except the contact portion 538 do not come into contact with the cap-down 550. At least one notch 532a may be formed on the vent bottom portion 532 of the vent plate 530.

For example, the notch 532a may be formed in a circular ring shape. Alternatively, a plurality of notches 532a may be formed in a streamlined shape and disposed so as to have a substantially circular shape. When the gas pressure inside the can 100 is greater than the predetermined fracture pressure due to overcharging, etc., the vent plate 530 may be inverted upward, and the notch 532a may be broken so that the gas inside the can 100 can be rapidly discharged to the outside through the through-hole 512 of the cap-up 510.

The cap-down 550 is disposed under the vent plate 530 and has a substantially disk shape. For example, the cap-down 550 may be formed of aluminum, an aluminum alloy, or an equivalent thereof, but the material thereof is not limited thereto. The cap-down 550 serves to support the cap-up 510 and prevent deformation of the cap-up 510 against an external force. The edge of the cap-down 550 may be bent toward the vent plate 530, and the insulating member 570 is disposed on the bent portion. The portion that is bent toward the vent plate 530 is defined as a third support portion 552. A disk portion of the cap-down 550, which is not bent, is defined as a cap-down bottom portion 554, and the cap-down bottom portion 554 may be formed to have a predetermined spacing from the vent bottom portion 532 of the vent plate 530. However, the approximately central portion of the cap-down bottom portion 554 is in contact with the contact portion 538 of the vent plate 530. The cap-down 550 may also have a through-hole 554a formed on the cap-down bottom 554, and when an abnormal internal pressure occurs, the internal gas passes through the through-hole 554a of the cap-down 550 to then be discharged to the outside of the can 100 through the notch 532a of the vent plate 530 and the through-hole 512 of the cap-up 510.

The insulating member 570 allows the vent plate 530 and the cap-down 550 to maintain a spaced state except for the contact portion 538, and serves to insulate the vent plate 530 and the cap-down 550 from each other. Therefore, the insulating member 570 may be shaped of a circular ring having a predetermined width when viewed from the top. For example, the insulating member 570 may be formed of polyethylene (PE), polypropylene (PP), ethylene propylene diene monomer (EPDM) (M-class) rubber, or an equivalent thereof, but is not limited thereto. The insulating member 570 may be welded to the vent plate 530 and the cap-down 550 by ultrasonic welding or laser welding.

When an external force is applied when forming the beading part 132 on the can 100 in the manufacturing process of the secondary battery 1000, stress may be generated in the cap assembly 500. The vent plate 530 may be deformed due to the stress generated, and deformation may easily occur in a region where a spacing exists between the vent plate 530 and the cap-down 550 (see FIG. 1). The reason of the foregoing is that the region where a spacing exists does not have a structure capable of supporting the vent plate 530, and since the notch 532a is formed in the corresponding region, the region may be vulnerable to deformation due to the stress generated. Therefore, in order to prevent the deformation of the vent plate 530, the support member 590 may be interposed in the region spaced from the cap-down 550 (hereinafter, to be referred to as a deformed portion C, the dotted line region of FIG. 3).

The support member 590, when viewed from above, may be shaped of a substantially circular ring having a predetermined width, and may be made of the same or similar material as the insulating member 570. Alternatively, the cap-down 550 may be made of the same or similar material as the cap-down 550. When the vent plate 530 is fractured, the support member 590 is located under the vent plate 530, and the vent plate 530 swells toward the cap-up 510, and thus the vent plate 530 and the support member 590 are not electrified. Accordingly, the support member 590 may be formed of aluminum, an aluminum alloy, or an equivalent thereof.

In addition, the support member 590 is disposed between the notch 532a and the contact portion 538 to fill the space between the vent plate 530 and the cap-down 550. Since the support member 590 supports the vent plate 530 from the lower portion, the vent plate 530 may be supported so as not to be deformed in the downward direction due to the stress. In addition, since the support member 590 is in contact with the bent plate 530, the stress can be dispersed.

The support member 590 is not fixed to the vent plate 530 so as not to interfere with the movement of gas and fracture of the notch 532a when abnormal internal pressure occurs, but may be fixed with the cap-down 550 by welding, etc. To this end, the support member 590 may be disposed inside the notch 532a on the basis of FIG. 3.

Referring to FIG. 3, an effective value at which the support member 590 can prevent deformation of the vent plate 530 will be described.

As shown in FIG. 3, the diameter of the vent bottom portion 532 of the vent plate 530 is defined as R1, the diameter of the contact portion 538 is defined as R2, and the width of the support member 590 is defined as L1. A total length of a portion where the bent plate 530 and the cap-down 550 indirectly contact through the support member 590 is twice the width L1 of the support member 590. In addition, the length of the portion where the vent plate 530 and the cap-down 550 directly contact corresponds to the diameter R2 of the contact portion 538. Accordingly, the total length of the portion where the vent plate 530 and the cap-down 550 directly or indirectly contact corresponds to (L1*2)+R2 (hereinafter, defined as the total contact length R3). Whether or not the deformed portion C of the vent plate 530 is deformed depends on how much of the total contact length R3 occupies, in percent (%), the length of the vent bottom portion 532 of the vent plate 530. The experiments therefor were conducted and summarized in FIG. 4.

FIG. 4 is a table showing the experimental results of deformation prevention for various numerical values of major parts of FIG. 3.

As shown in FIG. 4, for example, in the case in which the diameter R1 of the vent bottom portion 532 of the vent plate 530 is 11.4 mm, the diameter R2 of the contact portion 538 is 3.28 mm, and the width L1 of the support member 590 is 1.2 mm, the total contact length R3 is 5.68 mm, and, on the basis of the diameter of the vent bottom portion 532, the occupancy (R3/R1) occupied by the total contact length R3 is 51.4%. As a result of experiments conducted whether the vent plate 530 is deformed during the forming process of the beading part 132 by using the cap assembly 500 having these values, it can be seen that deformation prevention is not achieved, as shown in FIG. 4.

In the same way, while increasing the width L1 of the support member 590 by 0.2 mm, the occupancy of the total contact length R3 relative to the diameter of the vent bottom portion 532 can be obtained, and through the same experiment as described above, the experiment can be conducted as to whether or not the vent plate 530 is deformed.

As a result, as shown in FIG. 4, it can be seen that no deformation occurred in the deformed portion C of the vent plate 530 when the width L1 of the support member 590 is 1.8 mm, and the occupancy of the total contact length R3 relative to the diameter of the vent bottom portion 532 becomes 62% or more. In addition, when the width L1 of the support member 590 is at least 1.8 mm, most of the space between the notch 532a of the vent plate 530 and the contact portion 538 is occupied. Therefore, it can be seen that deformation does not occur in the deformed portion C of the vent plate 530 only when the width L1 of the support member 590 at least occupies the inward direction of the notch 532a (a minimum deformation prevention condition), and that being more than that will be okay.

Based on the experimental results, the diameter of the contact portion 538 and the length of the support member 590 relative to the diameter of the vent bottom portion 532 of the vent plate 530 in which the vent plate 530 is not deformed may be calculated. Therefore, even when an external force is applied, the support member 590 supports the deformed portion C to prevent deformation of the vent plate 530, and has an effect of smoothly discharging gas when abnormal pressure is generated.

In the above-described embodiment, a structure for preventing deformation of the vent plate, by providing a support member to the cap assembly in which the cap-up of the upward protruding form and the vent plate surround the edge of the cap-up, has been described. However, the support member of the present invention can also be applied to other types of cylindrical secondary batteries. Hereinafter, another embodiment of the present invention will be described (as to the same configuration as that of the above-described first embodiment, a detailed description will be omitted, and the direction toward the central axis D is defined as the inward direction, and the opposite direction is defined as the outward direction).

FIG. 5 is a longitudinal cross-sectional view illustrating a cap assembly of a cylindrical secondary battery according to a second embodiment of the present invention.

As shown in FIG. 5, the cap assembly 900 of the cylindrical secondary battery according to the second embodiment of the present invention may include a top plate 910, a bottom plate 920, an insulation plate 930 disposed between the top plate 910 and the bottom plate 920, and a support member 940 disposed between the top plate 910 and the insulation plate 930. Although not shown in the drawing, a beading part and a crimping part may be formed on the upper portion of a can of the secondary battery, and the edge of the cap assembly 900 may be inserted and fixed between the beading part and the crimping part with an insulating gasket interposed therebetween (see the cap assembly structure of FIG. 2).

The top plate 910 has a substantially disk shape, and may be configured such that the edge thereof is bent downward and then bent again in an inward direction (hereinafter, a bent portion). For example, the top plate 910 may be formed of aluminum, an aluminum alloy, or an equivalent thereof. A terminal portion 912 in which at least one notch 912a is formed may be formed in a predetermined region, on the basis of the central axis D of the top plate 910.

The terminal portion 912 serves as a terminal of the secondary battery and may be electrically connected to an external device. The terminal portion 912 may convexly protrude upwardly to a predetermined height, and a notch 912a is formed on the terminal portion 912.

The notch 912a is fractured when the internal gas pressure of the secondary battery is greater than a predetermined fracture pressure, and serves to rapidly discharge the internal gas of the secondary battery to the outside. The bottom plate 920 is disposed under the top plate 910.

The bottom plate 920 may include a base portion 922 positioned below the insulating plate 930 and a contact portion 924 that convexly protrude upwardly from the base portion 922 to be in contact with the bottom surface of the terminal portion 912 of the top plate 910. That is, the contact portion 924 passes through a hole in the inward direction of the ring-shaped insulating plate 930 and the support member 940 to be in contact with the terminal portion 912. The base portion 922 and the contact portion 924 are integrally formed, and the contact portion 924 may be welded and fixed to the lower surface of the terminal portion 912 of the top plate 910. At least one notch 924a may be formed on the contact portion 924.

The notch 924a is a portion that is fractured when the internal gas pressure of the secondary battery is greater than a predetermined fracture pressure. When the internal gas pressure of the secondary battery is greater than a predetermined pressure, the top plate 910 is convexly deformed upward before the notch 924a is fractured. Here, since the contact portion 924 is welded to the lower surface of the terminal portion 912, the contact portion 924 may be separated from the bottom plate 920 while the notch 924a of the bottom plate 920 is fractured. Accordingly, a current path between the top plate 910 and the bottom plate 920 is blocked, and thus the gas inside the secondary battery can be quickly discharged to the outside.

The insulation plate 930 is disposed between the top plate 910 and the bottom plate 920, and the lower surface thereof may be fixed to the upper surface of the base portion 922 of the bottom plate 920 by ultrasonic welding, etc. The insulation plate 930 may be shaped of a circular ring having a predetermined width when viewed from the top. For example, the insulation plate 930 may be formed of polyethylene (PE), polypropylene (PP), ethylene propylene diene monomer (EPDM) (M-class) rubber, or an equivalent thereof, but is not limited thereto. The support member 940 is inserted between the insulation plate 930 and the top plate 910.

The support member 940 may be shaped of a substantially ring having a greater width than the insulation plate 930, and may be made of the same or similar material as the insulation plate 930. Alternatively, the support member 940 may be made of the same or similar material as the top plate 910. Even if the support member 940 is electrified with the top plate 910, since it can be insulated from the bottom plate 920 by means of the insulation plate 930, the material of the support member 940 can be applied in various ways.

The support member 940 may be formed to have a greater thickness in the longitudinal direction of the central axis D than that of the insulation plate 930. The thickness of the bent portion 914 of the top plate 910 may support the support member 940 so as to surround the edge of the support member 940. In addition, part of the lower portion of the support member 940 may be supported while being in contact with the insulation plate 930. Contact portions of the support member 940 and the insulation plate 930 may be combined by ultrasonic welding, etc.

However, it is preferable that the support member 940 is not fixed by welding, etc. to the top plate 910 having the notch 912a formed therein so as not to impede gas movement inside the secondary battery. In addition, in the top plate 910 and the support member 940, portions adjacent to the notch 912a may be spaced apart from each other by a predetermined interval. To this end, the support member 940 may be formed to have a step difference between a surface in contact with the lower surface of the terminal portion 912 of the top plate 910 and a surface in contact with the lower surface of the bent portion 914. The stepped region may be a partial surface of the support member 940. Alternatively, the support member 940 may have a through-hole 942 located to correspond to the position of the notch 912a of the top plate 910.

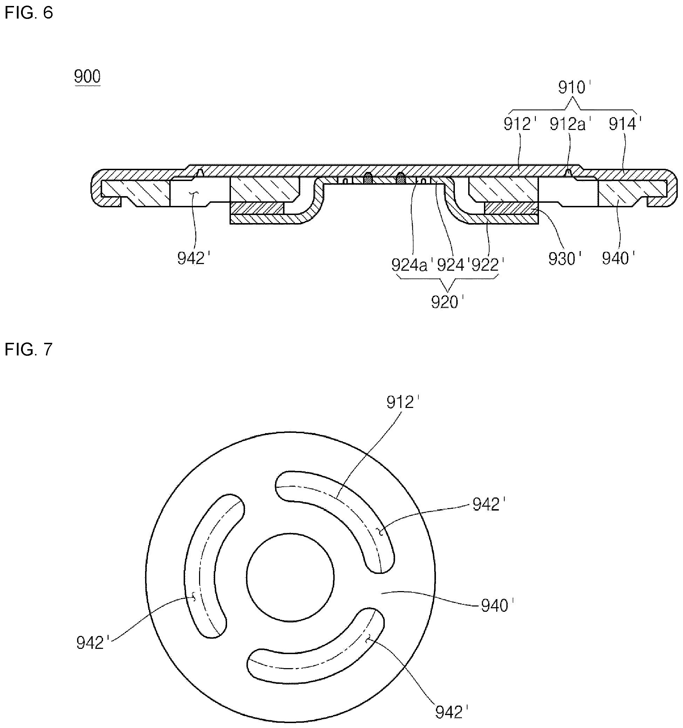

FIG. 6 is a longitudinal cross-sectional view illustrating a cap assembly of a cylindrical secondary battery according to a third embodiment of the present invention. FIG. 7 is a plan view illustrating a partial configuration of the cap assembly according to FIG. 6.

As shown in FIG. 6, a cap assembly 900' of a cylindrical secondary battery according to a third embodiment of the present invention has the same structure as the cap assembly 900 of FIG. 5, and may include a support member 940' having a through-hole 942' formed in a portion located to correspond to of a notch 912a' of a top plate 910'.

As shown in FIG. 7, a plurality of through-holes 942' may be formed in the support member 940'. The through-holes 942' may be located to correspond to the positions of notches 912a' of the top plate 910', and a plurality of through-holes may be formed through the plate surface of the support member 940' with a predetermined spacing therebetween. Therefore, when an abnormal pressure occurs inside the secondary battery, the internal gas can quickly move through the through-holes 942' of the support member 940'.

In the case of the support member 940' shown in FIGS. 5 to 7, the support member 940' has a structure of supporting both the inward and outward directions from the lower side around the notches 912a' of the top plate 910'. That is, the support member 940' shown in FIGS. 5 to 7 has a structure that sufficiently satisfies the minimum deformation prevention condition of the vent plate 530 shown in FIGS. 2 to 4. Accordingly, even when pressure is applied to form a beading part in a can during a secondary battery assembling process, it is possible to prevent the top plate 910' having the notches 912a' from being deformed.

While the foregoing embodiment has been provided for carrying out the present invention, it should be understood that the embodiment described herein should be considered in a descriptive sense only and not for purposes of limitation, and various changes in form and details may be made therein without departing from the spirit and scope of the disclosure as defined by the following claims.

## Claims

1. A secondary battery comprising:
a cylindrical can;
an electrode assembly accommodated in the cylindrical can; and
a cap assembly comprising a cap-up, a cap-down arranged under the cap-up, a vent plate which is arranged between the cap-up and the cap-down, is separated from the cap-down, and has at least one notch formed thereon, and an insulating member inserted between the vent plate and the cap-down so as to insulate the vent plate and the cap-down from each other,
wherein the cap assembly further comprises a support member inserted between the vent plate and the cap-down, separated from the insulating member, and arranged on the inner side of the insulating member.

2. The secondary battery of claim 1, wherein the support member is arranged on the inner region facing the longitudinal central axis of the can, on the basis of the notch.

3. The secondary battery of claim 2, wherein the insulating member and the support member have a circular ring shape, and the vent plate further comprises a contact portion penetrating the insulating member and the support member to be in contact with the cap-down.

4. The secondary battery of claim 3, wherein the support member is arranged between the notch and the contact portion.

5. The secondary battery of claim 4, wherein in the support member, the width in a direction perpendicular to the longitudinal central axis of the can is equal to or greater than the length between the notch and the contact portion.

6. The secondary battery of claim 1, wherein the support member is be welded to the insulating member.

7. A secondary battery comprising:
a cylindrical can;
an electrode assembly accommodated in the cylindrical can; and
a cap assembly comprising a top plate having at least one notch formed thereon, a bottom plate arranged under the top plate and having a contact portion in which a portion of the plate surface protrudes toward the top plate and comes into contact with the top plate, and an insulation plate arranged between the top plate and the bottom plate to insulate the top plate and the bottom plate from each other, except for the contact portion,
wherein the cap assembly further comprises a support member inserted between the top plate and the insulation plate to support the top plate.

8. The secondary battery of claim 7, wherein the support member is arranged on the inner region facing the longitudinal central axis of the can, on the basis of the notch.

9. The secondary battery of claim 8, wherein the insulating member and the support member have a circular ring shape, and the contact portion of the bottom plate penetrates the insulating member and the support member to be in contact with the top plate.

10. The secondary battery of claim 9, wherein the support member is arranged between the notch and the contact portion, and the top plate is shaped to surround the edge of the support member.

11. The secondary battery of claim 10, wherein the support member is welded to the insulating member.

12. The secondary battery of claim 7, wherein in the support member, a portion of the surface thereof being in contact with the notch is spaced apart from the notch.

13. The secondary battery of claim 7, wherein the support member has a plurality of through-holes formed therethrough at positions corresponding to the positions of the notch.
